# EUROPEAN PATENT SPECIFICATION

(11) **EP 4 538 548 B1**
(45) Date of publication and mention of the grant of the patent: **19.08.2026**
(21) Application number: 24206193.5
(22) Date of filing: 11.10.2024
(51) Int. Cl.: F16B 23/00, F16B 41/00, B60B 7/16

(54) **IMPROVED ANTI-THEFT LOCKING DEVICE FOR VEHICLE WHEEL**
DIEBSTAHLSICHERE BEFESTIGUNGSVORRICHTUNG FÜR FAHRZEUGRÄDER
DISPOSITIF DE VERROUILLAGE ANTIVOL POUR ROUES DE VÉHICULE

(30) Priority: 11.10.2023 IT 202300021171
(43) Date of publication of application: 16.04.2025
(73) Proprietor: Evolution Srl, 20833 Giussano (MB) (IT)
(72) Inventor: GROPPO, Matteo, 12040 SANFRE' (CN) (IT); GROPPO, Lazzaro, 12040 SANFRE' (CN) (IT)
(74) Representative: Robba, Pierpaolo

(56) References cited:
- EP-A1- 2 196 686
- WO-A1-2023/044037
- WO-A2-2015/159034
- GB-A- 2 578 578
- US-A1- 2016 361 947

## Description

### Technical Field

The present invention relates to an improved anti-theft locking device for vehicle wheel.

More particularly, the present invention relates to an anti-theft bolt or nut for securing a motor vehicle wheel to the hub.

### Prior Art

In the field of vehicles, it is known to use locking devices provided in the form of a nut or bolt to prevent fraudulent detachment of vehicle parts. A particular use of these devices made as a nut and bolt concerns locking of the wheels of a vehicle that comprise metal alloy rims. According to prior art, to prevent theft of vehicle wheels, at least one of the standard nuts or bolts is replaced with a corresponding one of the anti-theft type. These locking devices are generally designed to be housed in a special seat or hole provided on the alloy wheel rim and comprise a cylindrical body having either a longitudinal threaded hole for engaging the device on a threaded stem, when they are made as nuts, or a longitudinal threaded stem for engaging in a threaded hole, when they are made as bolts. The hole in the nut can be either a through-hole or a blind hole, depending on the applications. Furthermore, still according to prior art, the cylindrical body is provided with a head portion having an axial seat, for example, made as a groove with irregular profile, intended for being engaged by a tool or proprietary actuating wrench. Such locking devices are further equipped with a proprietary wrench suitable for being received in the seat provided on the head portion of the locking device. The proprietary actuating wrench also has an outer surface having a shape adapted to engage with a standard wrench, for example a tube wrench with hexagonal head, with which it is possible to rotate the actuating wrench and, by means thereof, the anti-theft nut or bolt.

To prevent the nut or bolt from being rotated without the use of the complementary anti-theft wrench, it is known to provide a bushing fitted on the head of the nut or bolt so as to be idly rotatable relative to said head.

Thanks to the presence of the bushing that is idly mounted, i.e. free to rotate about the body of the nut or bolt, it is impossible to grasp and unscrew the nut or bolt from the outside with a conventional tool such as, for example, a pair of pliers or the like.

Obviously, if it were possible to rotate the head of the nut or bolt without using the complementary wrench, the anti-theft function of the device would be nullified.

Generally, when the locking device is housed in the seat provided on the wheel rim, an annular gap is defined between the inner surface of the seat and the outer surface of the locking device. This annular gap facilitates access of the proprietary actuating wrench, which, engaging in said seat, allows the locking device to be rotated. The width of the annular gap provided between the inner surface of the seat on the alloy rim and the outer surface of the locking device can be controlled by dimensioning the diameter of the head portion of the locking device according to the diameter of the seat provided on the wheel rim.

US2020049189, GB 2 578 578 A and WO2015159034 show corresponding examples of anti-theft devices of the above-mentioned type.

Furthermore, with the increasing number of electric and/or hybrid-powered vehicles, the systems for securing wheels to vehicles had to evolve towards more reliable and better performing retaining solutions.

Electric propulsion vehicles deliver all available power already from low engine speeds, ensuring high mechanical torques at the wheels, which torques allow faster acceleration and high cruising speeds. In addition, upon braking, electric and/or hybrid propulsion vehicles integrate a kinetic energy regeneration system, which, in practice, allows the electric motor to brake the vehicle by recovering energy and thus recharging the battery.

As a result, systems for fixing wheels to vehicle hubs are continuously subjected to frequent mechanical stresses such as vibrations, loads parallel to the axis of the screw, shear loads perpendicular to the axis, etc., which can affect the unscrewing of conventional anti-theft locking devices for vehicle wheels.

For the aforementioned reasons, in order to ensure retaining to the wheel-hub coupling, it is necessary to impart the correct tightening torque [in N/m] between bolt and hub, represented by screws tightened to the yield point of the bolt itself, which operation is very difficult to perform with conventional anti-theft locking devices because of the small size of the grooves.

There is therefore a need for anti-theft devices of the above-mentioned type, capable of withstanding high tightening torques and at the same time resisting increasingly severe tampering attempts, in particular those that can cause the head of the anti-theft device to be rotated by tools other than the corresponding complementary wrench.

It is an object of the invention to provide an answer to the above-mentioned need by proposing an effective solution to the problem of how to avoid fraudulent or heavy-duty-related removal of anti-theft nuts and bolts.

More particularly, it is an object of the present invention to provide an anti-theft locking device for securing a vehicle wheel that can withstand high tightening torques and ensures optimal retaining between the elements to be connected, thereby preventing unscrewing of the bolt.

Another object of the invention is to provide an anti-theft locking device of the above-mentioned type that can withstand particularly severe tampering attempts while allowing the realization of a large number of different configurations of the coupling groove.

A further object of the invention is to provide an anti-theft locking device of the above-mentioned type that can be made either in the form of a threaded nut or in the form of a bolt having a threaded stem.

A still further object of the invention is to provide such a device whose groove is difficult to access from the outside, so as to reduce the possibility of tampering.

A still further object of the invention is to provide such a device that is simple and inexpensive to manufacture and thus lends itself to industrial production in large quantities.

These and other objects are achieved with the device of the invention having the features of the appended claim 1.

Advantageous embodiments of the invention result from the dependent claims.

Further features of the anti-theft locking device according to the present invention will become more apparent from the ensuing detailed description, referring to a purely illustrative embodiment thereof.

### Summary of the Invention

The anti-theft locking device for securing a wheel to a vehicle hub according to the present invention essentially comprises a substantially cylindrical metal body, preferably made of steel, in which there are defined a first end, a second end and a threaded surface extending axially about a longitudinal axis of symmetry of the device.

Depending on whether said device is provided in the form of a nut or bolt, the corresponding thread is made as a male thread or a female thread, respectively.

The locking device is further provided with a head comprising a distal retaining part and a proximal driving part, the latter being in the form of a radial flange intended to engage with a removable anti-theft wrench.

With the anti-theft wrench engaged in the driving part of the locking device it is possible to rotate the device about its own axis to cause screwing or unscrewing of the device.

The device further comprises a swivel bushing idly mounted around the head of the anti-theft locking device.

The proximal driving part is shaped, at its outer perimeter, with a succession of valleys and ridges defining together a proprietary engagement coupling combination for corresponding ridges and valleys of the anti-theft wrench.

By the term proprietary it is meant that the combination defined by the succession of ridges and valleys defines a profile that has no correspondence in shapes and profiles commonly used in the field of locking devices such as nuts and bolts. The proprietary combination will therefore preferably be irregular, with valleys and ridges that are not all the same - for example, some will be beveled and others will be sharp-edged - and with different pitch and profile angle, according to the perimeter portion concerned.

Preferably, according to the invention, the proprietary combination comprises an odd succession of valleys and ridges.

According to the invention, the anti-theft locking device comprises an engagement coupling combination capable of receiving, in engagement coupling, the anti-theft wrench in at least two different angular positions about the longitudinal axis.

Preferably, the engagement coupling combination comprises a succession of valleys and ridges alternating with each other in an asymmetric arrangement relative to any plane passing through the longitudinal axis of symmetry of the device.

Advantageously, thanks to this provision, the anti-theft locking device can be engaged by the corresponding anti-theft wrench in at least two different positions, thereby preventing it from having to be rotated excessively to meet the correct position of engagement coupling.

This provision is particularly effective in reducing the risks of jamming when the anti-theft wrench is manipulated by the arm controlled by an automated robot, typically used in vehicle assembly lines.

The effectiveness of this provision is therefore particularly evident when the anti-theft locking device is first installed, i.e. when the vehicle is factory-fitted, thanks also to the reduction in installation time as a result of the reduced rotation necessary to engage the locking device with the anti-theft wrench.

Furthermore, according to a particular aspect of the present invention, the locking device is configured so that the proximal driving part comprises primary perimeter portions including at least a first perimeter portion and a second perimeter portion, each comprising at least one ridge and at least one valley.

The first and second perimeter portions are made angularly offset relative to a diameter axis passing through the longitudinal axis of symmetry of the device, preferably diametrically opposed to each other along a first diameter axis perpendicular to said longitudinal axis of symmetry of the anti-theft locking device.

Also, according to a further particular aspect of the present invention, the anti-theft locking device is configured so that the primary perimeter portions comprise at least a third perimeter portion and a fourth perimeter portions, each comprising at least one ridge and at least one valley.

The third and fourth perimeter portions are made angularly offset relative to a diameter axis passing through the longitudinal axis of symmetry of the device, more preferably diametrically opposed to each other along a second diameter axis perpendicular to said longitudinal axis of symmetry of the anti-theft locking device.

In a particularly preferred embodiment of the invention, the second diameter axis is perpendicular to said first diameter axis.

According to a particular aspect of the invention, the proximal driving part comprises auxiliary perimeter portions joining each of said primary perimeter portions to the adjacent primary perimeter portions.

According to a preferred embodiment of the invention, the profile angles of the ridges of said primary portions are smaller than the profile angles of the ridges of the auxiliary portions.

Furthermore, even more preferably, the difference between the profile angle of said primary perimeter portions and the profile angle of said auxiliary perimeter portions is due to the fact that the pitch of said auxiliary perimeter portions is larger than the pitch of said primary perimeter portions.

Still according to a preferred embodiment of the invention, the depth of the valleys of said auxiliary perimeter portions is larger than the depth of said primary perimeter portions.

### Brief Description of the Figures

Some preferred embodiments of the invention will be described by way of non-limiting example with reference to the annexed figures, in which:
- Fig.1 is a side plan view of the device in a first embodiment of the invention;
- Fig.2 is a sectional view taken along a longitudinal plane of the device of Fig. 1;
- Fig.3 is a top plan view of the device of Fig. 1;
- Fig.4 is a side plan view of the device in a second embodiment of the invention;
- Fig.5 is a sectional view taken along a longitudinal plane of the device of Fig.4;
- Fig.6 is a side plan view of the anti-theft wrench;
- Fig.7 is a sectional view taken along a longitudinal plane of the anti-theft wrench of Fig.6;
- Fig.8 is a top plan view of the anti-theft wrench of Fig.6;
- Fig.9 is a schematic representation of valleys and ridges;
- Fig.10 is a schematic representation of the driving part.

In all figures, the same reference numerals have been used to distinguish identical or functionally equivalent components.

### Description of some preferred embodiments of the invention

Referring to the annexed figures, an anti-theft locking device according to the invention for securing a wheel to a vehicle hub is shown.

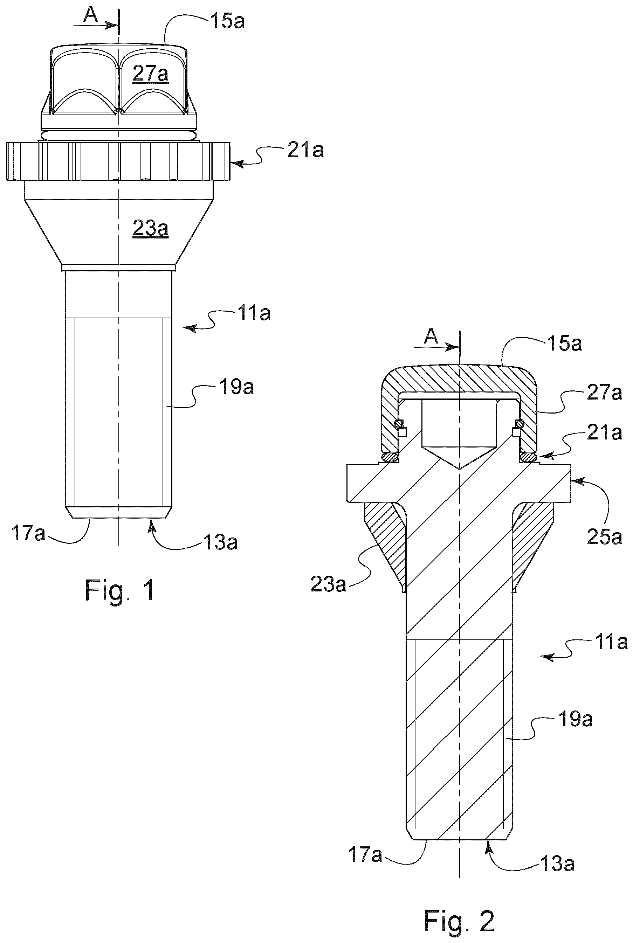

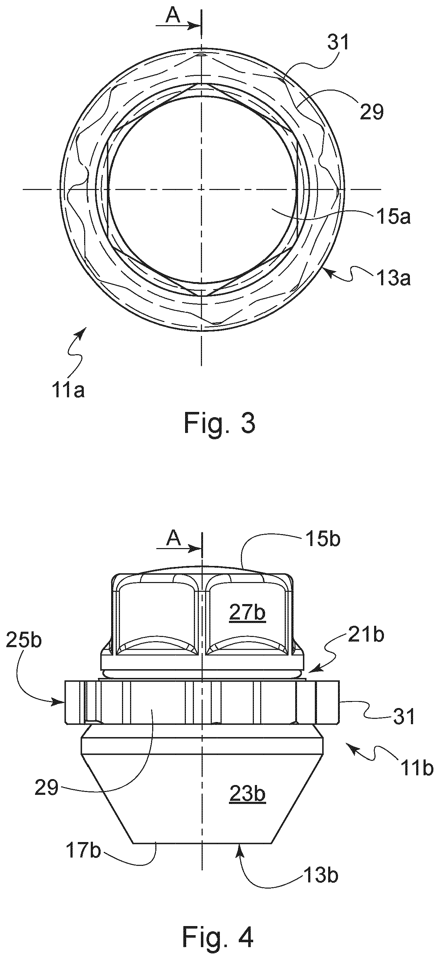

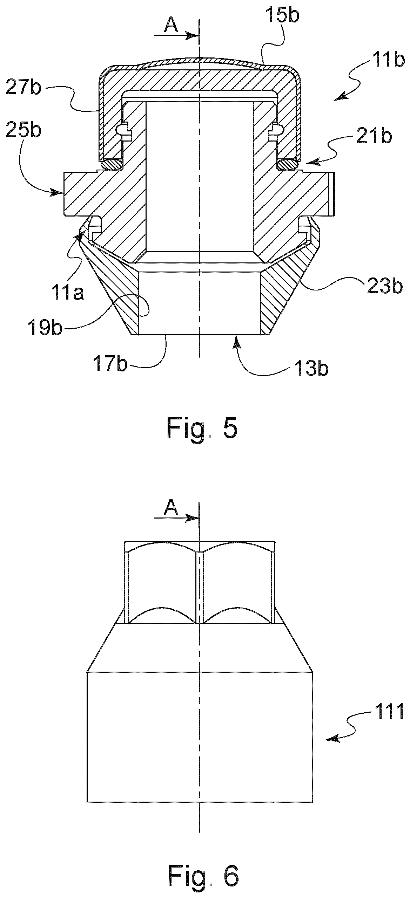

The locking device has been indicated as a whole with reference numeral 11a when made as a bolt (Figs. 1, 2 and 3) and 11b when made as a nut (Figs.4 and 5). In the Figures, identical reference numerals indicate identical or functionally equivalent elements and are accompanied by the letter "a" when they refer to the device made as a bolt and "b" when they refer to the device made as a nut.

Referring in particular to Figs. 1 to 3, the device 11a made as a bolt comprises a substantially cylindrical metal body, preferably made of steel, 13a in which there are defined a first end 15a, a second end 17a and a male threaded surface 19a extending axially about a longitudinal axis of symmetry "A" of the device.

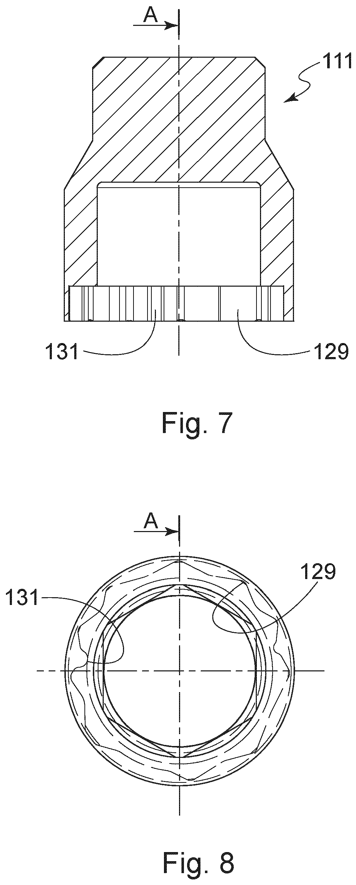

The bolt 11a is further provided with a head 21a comprising a distal retaining part 23a and a proximal driving part 25a made as a radial flange intended to engage with a removable anti-theft wrench 111 (Figs.6,7,8).

With the anti-theft wrench 111 engaged in the driving part 25a of the body of the locking device 11a it is possible to rotate the bolt about its own axis "A" to cause screwing or unscrewing of the device.

The bolt 11a further comprises a swivel bushing 27a idly mounted about the head 21a of the anti-theft locking device.

The proximal driving part 25a is shaped at its outer perimeter with a succession of valleys 29 and ridges 31, which together define a proprietary engagement coupling combination for corresponding valleys 129 and ridges 131 provided in the anti-theft wrench 111.

The engagement coupling combination defined by the succession of valleys and ridges of the outer perimeter of the driving part 25a is arranged to receive in engagement coupling the anti-theft wrench 111 in at least two different angular positions about the axis "A".

The anti-theft locking device 11a can therefore be engaged with the corresponding anti-theft wrench 111, in at least two different positions, thereby preventing the wrench 111 from having to be rotated excessively to meet the correct position of engagement coupling with the anti-theft bolt 11a.

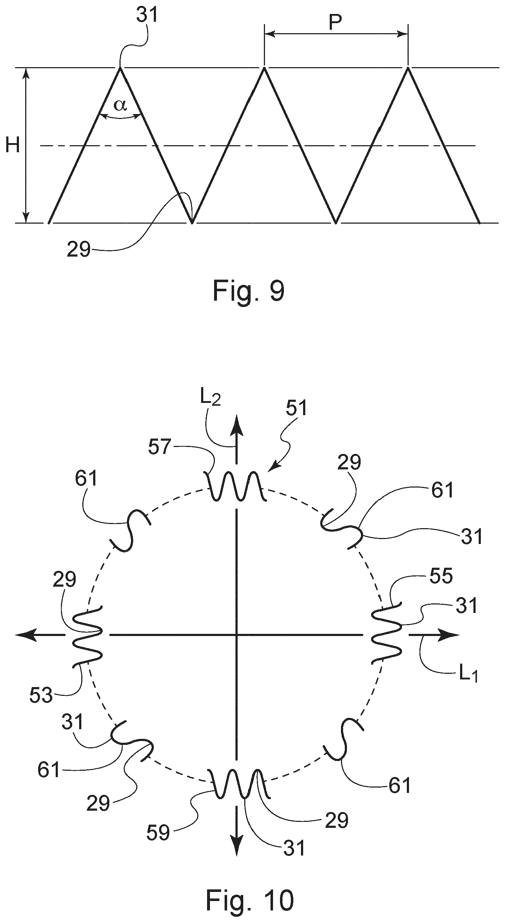

Furthermore, as can be best appreciated in Fig. 10, according to a particular aspect of the present invention, the locking device 11a,11b is configured so that the corresponding proximal driving part 25a,25b comprises primary perimeter portions 51, including at least a first perimeter portion 53 and a second perimeter portion 55, each comprising at least one ridge 31 and at least one valley 29.

The first and second perimeter portions 53,55 are made angularly offset relative to a diameter axis passing through the longitudinal axis of symmetry "A" of the device, more preferably, as shown in Fig.10, diametrically opposed to each other along a first diameter axis "L1"perpendicular to said longitudinal axis of symmetry "A" of the anti-theft locking device 11a,11b.

Also, according to a further particular aspect of the present invention, the locking device 11a,11b is configured so that the primary perimeter portions 51 include at least a third perimeter portion 57 and a fourth perimeter portion 59, each comprising at least one valley 29 and at least one ridge 31.

The third and fourth perimeter portions 57,59 are made angularly offset relative to a diameter axis passing through the longitudinal axis of symmetry "A" of the device, more preferably, as shown in Fig.10, diametrically opposed to each other along a second diameter axis "L2" perpendicular to said longitudinal axis of symmetry of the anti-theft locking device 11a,11b.

In a particular embodiment of the invention, the second diameter axis "L2" is perpendicular to said first diameter axis "L1".

According to a particular aspect of the invention, the proximal driving part 25a,25b comprises auxiliary perimeter portions 61, also defined by a succession of valleys 29 and ridges 31, joining each of said primary perimeter portions 53,55 to the adjacent primary perimeter portions 57,59.

As can be best appreciated from Fig.9, the ridges 31 define corresponding profile angles α of the ridges 31 of said primary and auxiliary perimeter portions.

According to a preferred embodiment of the invention shown in the Figures, the profile angles α of the ridges 31 of said primary perimeter portions are smaller than the profile angles α of the ridges 31 of the auxiliary perimeter portions.

Furthermore, even more preferably, the difference between the profile angle of said ridges 31 of the primary perimeter portions and the profile angle of said ridges 31 of the auxiliary perimeter portions is due to the fact that the pitch "P" of said auxiliary perimeter portions 61 is larger than the pitch of said primary perimeter portions 51.

Still according to a preferred embodiment of the invention, the depth of the valleys 29 of said auxiliary perimeter portions 61 is larger than the depth of the valleys of said primary perimeter portions 51.

The locking device, in any of its preferred embodiments, can be made of any suitable material, but it will preferably be made of steel.

Advantageously, the anti-theft locking device according to the invention can be achieved by simple and inexpensive intervention in traditional manufacturing steps.

Although the invention has been described above with particular reference to some of its embodiments provided only as non-limiting examples, numerous modifications and variations will be apparent to a person skilled in the art in the light of the above description. The present invention, therefore, is intended to encompass all modifications and variations within the reach of the person skilled in the art, without thereby departing from the scope of the invention itself as defined in the appended claims.

## Claims

1. Anti-theft locking device (11a;11b) for securing a wheel to the hub of a vehicle, provided with a removable anti-theft wrench (111) with which said anti-theft locking device (11a;11b) can be rotated, said anti-theft locking device (11a;11b) comprising a substantially cylindrical metal body (13a;13b), in which there are defined a first end (15a;15b), a second end (17a;17b), a longitudinal axis ("A"), a threaded surface (19a;19b) extending axially about said longitudinal axis ("A") and having a female or male thread, depending on whether said device (11a; 11b) is made as a nut (11a) or bolt (11b), and a head (21a,21b) comprising a distal retaining part (23a;23b) and a proximal driving part (25a;25b) in the form of a radial flange intended to engage with said removable anti-theft wrench (111) with which said device (11a; 11b) can be rotated, and a swivel bushing (27a;27b) idly mounted around the head (21a;21b) of the anti-theft locking device (11a;11b), wherein said proximal driving part (25a;25b) is shaped at its outer perimeter (27a;27b) with a succession of valleys (29) and ridges (31), wherein said valleys and ridges define an irregular engagement coupling combination with corresponding valleys (129) and ridges (131) provided in the anti-theft wrench (111), wherein said engagement coupling combination is arranged to receive in engagement coupling the anti-theft wrench (111) in at least two different angular positions about the axis ("A"), **characterized in that** the irregular engagement coupling combination comprises at least some valleys (129) and/or some ridges (131) different from one another and **in that** the engagement coupling combination is irregular with valleys (129) and ridges (131) that are not all the same.

2. Device according to claim 1, wherein some valleys (129) are beveled and other valleys (129) are sharp-edged and with different pitch and profile angle according to the perimeter portion concerned.

3. Device according to claim 1 or 2, wherein some ridges (131) are beveled and other ridges (131) are sharp-edged and with different pitch and profile angle according to the perimeter portion concerned.

4. Device according to any one of the preceding claims, wherein the engagement coupling combination comprises a succession of valleys (129) and ridges (131) alternated with each other in an asymmetrical arrangement relative to any plane passing through the longitudinal axis of symmetry ("A") of the device.

5. Device according to any one of the preceding claims, wherein said proximal driving part (25a;25b) comprises primary perimeter portions (51) including at least a first perimeter portion (53) and a second perimeter portion (55), said first and second perimeter portions being provided angularly offset relative to a diameter axis passing through the longitudinal axis of symmetry ("A") of the device.

6. Device according to any one of claims 1 to 4, wherein said proximal driving portion (25a;25b) comprises primary perimeter portions (51) including at least a first perimeter portion (53) and a second perimeter portion (55) diametrically opposed to each other along a first diameter axis ("L1") perpendicular to said longitudinal axis ("A") of said anti-theft locking device (11a; 11b), said first and said second perimeter portions comprising at least one ridge (31) and at least one valley (29).

7. Device according to claim 5 or 6, wherein said proximal driving portion (25a;25b) comprises at least a third perimeter portion (57) and a fourth perimeter portion (59) diametrically opposed to each other along a second diameter axis ("L2") perpendicular to said first diameter axis ("L1") and longitudinal axis ("A"), said second and third perimeter portions including at least one ridge (31) and at least one valley (29).

8. Device according to claim 7, wherein said proximal driving part (25a;25b) comprises auxiliary perimeter portions (61) provided with ridges (31) and valleys (29) joining each of said primary perimeter portions (51) to the adjacent primary perimeter portions (51).

9. Device according to claim 8, wherein the profile angles (α) of the ridges (31) of said primary portions (51) are smaller than the profile angles (α) of the ridges (31) of the auxiliary portions (61).

10. Device according to claim 9, wherein the difference between the profile angle (α) of said primary perimeter portions (51) and the profile angle (α) of said auxiliary perimeter portions (61) is due to the fact that the pitch (P) of said perimeter portions (61) is larger than the pitch (P) of said primary perimeter portions (51).

11. Device according to any one of the preceding claims, wherein the depth (H) of the valleys (29) of said auxiliary perimeter portions (61) is larger than the depth (H) of said primary perimeter portions (51).

12. Device according to any one of the preceding claims, wherein said proximal driving part (25a;25b) comprises an odd succession of valleys (29) and ridges (31).

13. Device according to any one of the preceding claims, wherein the locking device is made of metal, preferably steel.

## Patentansprüche

1. Diebstahlsichere Befestigungsvorrichtung (11a; 11b) zum Sichern eines Rads an einer Nabe eines Fahrzeugs, zur Verfügung gestellt mit einem abnehmbaren Diebstahlsicherungsschlüssel (111), mit dem die diebstahlsichere Befestigungsvorrichtung (11a; 11b) gedreht werden kann, wobei die diebstahlsichere Befestigungsvorrichtung (11a; 11b) einen im wesentlichen zylindrischen Metallkörper (13a; 13b) aufweist, in dem ein erstes Ende (15a; 15b), ein zweites Ende (17a, 17b), eine Längsachse ("A"), eine Gewindefläche (19a; 19b), die sich axial um die Längsachse ("A") erstreckt und abhängig davon, ob die Vorrichtung (11a; 11b) als eine Mutter (11a) oder ein Bolzen (11b) ausgebildet ist, ein Innengewinde oder ein Außengewinde aufweist, und ein Kopf (21a, 21b), der einen distalen Halteteil (23a; 23b) und einen proximalen Antriebsteil (25a; 25b) in Form eines radialen Flanschs, der dafür ausgelegt ist, mit dem abnehmbaren Diebstahlsicherungsschlüssel (111) zusammenzuwirken, mit dem die Vorrichtung (11a; 11b) gedreht werden kann, und eine Drehbuchse (27a; 27b), die lose auf dem Kopf (21a; 21b) der diebstahlsicheren Befestigungsvorrichtung (11a; 11b) montiert ist, aufweist, definiert sind, wobei der proximale Antriebsteil (25a; 25b) an seinem äußeren Umfang (27a; 27b) mit einer Folge von Tälern (29) und Bergen (31) versehen ist, wobei die Täler und Berge eine unregelmäßige Eingriffskupplungskombination mit entsprechenden Tälern (129) und Bergen (131) definieren, die in dem Diebstahlsicherungsschlüssel (111) vorgesehen sind, wobei die Eingriffskupplungskombination dafür ausgelegt ist, den diebstahlsicheren Schlüssel (111) in wenigstens zwei verschiedenen Winkelstellungen um die Achse ("A") in Eingriffskupplung aufzunehmen, **dadurch gekennzeichnet, dass** die unregelmäßige Eingriffskupplungskombination wenigstens einige Täler (129) und/oder einige Berge (131) aufweist, die sich voneinander unterscheiden, und dass die Eingriffskupplungskombination mit Tälern (129) und Bergen (131), die nicht gleich sind, unregelmäßig ist.

2. Vorrichtung nach Anspruch 1, wobei einige Täler (129) stumpfwinklig und andere Täler (129) scharfkantig und mit anderer Gewindesteigung und Profilwinkel gemäß den betroffenen Umfangsabschnitt ausgebildet sind.

3. Vorrichtung nach Anspruch 1 oder 2, wobei einige Berge (131) stumpfwinklig und andere Berge (131) scharfkantig und mit anderer Gewindesteigung und Profilwinkel gemäß dem betreffenden Umfangsabschnitt ausgebildet sind.

4. Vorrichtung nach einem der vorstehenden Ansprüche, wobei die Eingriffskopplungskombination eine Folge von Tälern (129) und Bergen (131) aufweist, die sich in einer asymmetrischen Anordnung relativ zu jeder Ebene, die durch die Längssymmetrieachse ("A") der Vorrichtung verläuft, abwechseln.

5. Vorrichtung nach einem der vorstehenden Ansprüche, wobei der proximale Antriebsteil (25a; 25b) primäre Umfangsabschnitte (51) aufweist, die wenigstens einen ersten Umfangsabschnitt (53) und einen zweiten Umfangsabschnitt (55) enthalten, wobei die ersten und zweiten Umfangsabschnitte in Bezug auf eine Durchmesserachse, die durch die Längssymmetrieachse ("A") der Vorrichtung verläuft, winklig versetzt sind.

6. Vorrichtung nach einem der Ansprüche 1 bis 4, wobei der proximale Antriebsabschnitt (25a, 25b) primäre Umfangsabschnitte (51) aufweist, die wenigstens einen ersten Umfangsabschnitt (53) und einen zweiten Umfangsabschnitt (55) aufweist, die sich diametral entlang einer ersten Durchmesserachse (L1), die senkrecht zu der Längsachse ("A") der Diebstahlsicherungsvorrichtung (11a; 11b) verläuft, gegenüberliegen, wobei die ersten und zweiten Umfangsabschnitte wenigstens einen Berg (31) und wenigstens ein Tal (29) aufweisen.

7. Vorrichtung nach Anspruch 5 oder 6, wobei der proximale Antriebsabschnitt (25a; 25b) wenigstens einen dritten Umfangsabschnitt (57) und einen vierten Umfangsabschnitt (59) aufweist, die einander entlang einer zweiten Durchmesserachse ("L2") gegenüberliegen, die senkrecht zu der ersten Durchmesserachse ("L1") und der Längsachse ("A") gegenüberliegen, wobei die zweiten und dritten Umfangsabschnitte wenigstens einen Berg (31) und wenigstens ein Tal (29) aufweisen.

8. Vorrichtung nach Anspruch 7, wobei der proximale Antriebsteil (25a; 25b) Hilfsumfangsabschnitte (61) aufweist, die mit Bergen (31) und Tälern (29) versehen sind, die jeden der primären Umfangsabschnitte (51) mit den benachbarten primären Umfangsabschnitten (51) verbinden.

9. Vorrichtung nach Anspruch 8, wobei die Profilwinkel (α) der Berge (31) der Primärabschnitte (51) kleiner als die Profilwinkel (α) der Berge (31) der Hilfsabschnitte (61) sind.

10. Vorrichtung nach Anspruch 9, wobei der Unterschied zwischen dem Profilwinkel (α) der primären Umfangsabschnitte (51) und dem Profilwinkel (α) der Hilfsumfangsabschnitte (61) auf der Tatsache beruht, dass die Gewindesteigung (P) der Umfangsabschnitte (61) größer als die Gewindesteigung (P) der primären Umfangsabschnitte (51) ist.

11. Vorrichtung nach einem der vorstehenden Ansprüche, wobei die Tiefe (H) der Täler (29) der Hilfsumfangsabschnitte (61) größer als die Tiefe (H) der primären Umfangsabschnitte (51) ist.

12. Vorrichtung nach einem der vorstehenden Ansprüche, wobei der proximale Antriebsteil (25a; 25b) eine ungerade Abfolge von Tälern (29) und Bergen (31) aufweist.

13. Vorrichtung nach einem der vorstehenden Ansprüche, wobei die Sicherungsvorrichtung aus Metall, vorzugsweise Stahl, ist.

## Revendications

1. Dispositif de verrouillage antivol (11a ; 11b) pour fixer une roue au moyeu d'un véhicule, pourvu d'une clé antivol amovible (111) avec laquelle ledit dispositif de verrouillage antivol (11a ; 11b) peut être entraîné en rotation, ledit dispositif de verrouillage antivol (11a ; 11b) comprenant un corps métallique sensiblement cylindrique (13a ; 13b), dans lequel sont définis une première extrémité (15a ; 15b), une seconde extrémité (17a ; 17b), un axe longitudinal (« A »), une surface filetée (19a ; 19b) s'étendant axialement autour dudit axe longitudinal (« A ») et présentant un filetage femelle ou mâle, selon que ledit dispositif (11a ; 11b) est réalisé sous forme d'un écrou (11a) ou d'un boulon (11b), et une tête (21a, 21b) comprenant une partie de retenue distale (23a ; 23b) et une partie d'entraînement proximale (25a ; 25b) sous la forme d'une collerette radiale destinée à venir en prise avec ladite clé antivol amovible (111) avec laquelle ledit dispositif (11a ; 11b) peut être entraîné en rotation, et une bague pivotante (27a ; 27b) montée folle autour de la tête (21a ; 21b) du dispositif de verrouillage antivol (11a ; 11b), dans lequel ladite partie d'entraînement proximale (25a ; 25b) est conformée au niveau de son périmètre extérieur (27a ; 27b) avec une succession de creux (29) et de crêtes (31), dans lequel lesdits creux et crêtes définissent une combinaison de couplage d'engagement irrégulière avec des creux correspondants (129) et des crêtes correspondantes (131) prévus dans la clé antivol (111), dans lequel ladite combinaison de couplage d'engagement est agencée pour recevoir en couplage d'engagement la clé antivol (111) dans au moins deux positions angulaires différentes autour de l'axe (« A »), **caractérisé en ce que** la combinaison de couplage d'engagement irrégulière comprend au moins certains creux (129) et/ou certaines crêtes (131) différents les uns des autres et **en ce que** la combinaison de couplage d'engagement est irrégulière avec des creux (129) et des crêtes (131) qui ne sont pas tous identiques.

2. Dispositif selon la revendication 1, dans lequel certains creux (129) sont chanfreinés et d'autres creux (129) sont à arêtes vives et avec un pas et un angle de profil différents selon la portion de périmètre concernée.

3. Dispositif selon la revendication 1 ou 2, dans lequel certaines crêtes (131) sont chanfreinées et d'autres crêtes (131) sont à arêtes vives et avec un pas et un angle de profil différents selon la portion de périmètre concernée.

4. Dispositif selon l'une quelconque des revendications précédentes, dans lequel la combinaison de couplage d'engagement comprend une succession de creux (129) et de crêtes (131) alternés les uns avec les autres dans un agencement asymétrique par rapport à tout plan passant par l'axe longitudinal de symétrie (« A ») du dispositif.

5. Dispositif selon l'une quelconque des revendications précédentes, dans lequel ladite partie d'entraînement proximale (25a ; 25b) comprend des portions de périmètre primaires (51) incluant au moins une première portion de périmètre (53) et une seconde portion de périmètre (55), lesdites première et seconde portions de périmètre étant disposées avec un décalage angulaire par rapport à un axe diamétral passant par l'axe longitudinal de symétrie (« A ») du dispositif.

6. Dispositif selon l'une quelconque des revendications 1 à 4, dans lequel ladite partie d'entraînement proximale (25a ; 25b) comprend des portions de périmètre primaires (51) incluant au moins une première portion de périmètre (53) et une seconde portion de périmètre (55) diamétralement opposées l'une à l'autre le long d'un premier axe diamétral (« L1 ») perpendiculaire audit axe longitudinal (« A ») dudit dispositif de verrouillage antivol (11a ; 11b), lesdites première et seconde portions de périmètre comprenant au moins une crête (31) et au moins un creux (29).

7. Dispositif selon la revendication 5 ou 6, dans lequel ladite partie d'entraînement proximale (25a ; 25b) comprend au moins une troisième portion de périmètre (57) et une quatrième portion de périmètre (59) diamétralement opposées l'une à l'autre le long d'un second axe diamétral (« L2 ») perpendiculaire audit premier axe diamétral (« L1 ») et à l'axe longitudinal (« A »), lesdites seconde et troisième portions de périmètre incluant au moins une crête (31) et au moins un creux (29).

8. Dispositif selon la revendication 7, dans lequel ladite partie d'entraînement proximale (25a ; 25b) comprend des portions de périmètre auxiliaires (61) pourvues de crêtes (31) et de creux (29) reliant chacune desdites portions de périmètre primaires (51) aux portions de périmètre primaires (51) adjacentes.

9. Dispositif selon la revendication 8, dans lequel les angles de profil (α) des crêtes (31) desdites portions primaires (51) sont inférieurs aux angles de profil (α) des crêtes (31) des portions auxiliaires (61).

10. Dispositif selon la revendication 9, dans lequel la différence entre l'angle de profil (α) desdites portions de périmètre primaires (51) et l'angle de profil (α) desdites portions de périmètre auxiliaires (61) est due au fait que le pas (P) desdites portions de périmètre (61) est supérieur au pas (P) desdites portions de périmètre primaires (51).

11. Dispositif selon l'une quelconque des revendications précédentes, dans lequel la profondeur (H) des creux (29) desdites portions de périmètre auxiliaires (61) est supérieure à la profondeur (H) desdites portions de périmètre primaires (51).

12. Dispositif selon l'une quelconque des revendications précédentes, dans lequel ladite partie d'entraînement proximale (25a ; 25b) comprend une succession impaire de creux (29) et de crêtes (31).

13. Dispositif selon l'une quelconque des revendications précédentes, dans lequel le dispositif de verrouillage est réalisé en métal, de préférence en acier.
